**Europäisches Patentamt**

**European Patent Office**

**Office européen des brevets**

(19)

(11) Veröffentlichungsnummer: **0 235 615**
**A2**

# (12) EUROPÄISCHE PATENTANMELDUNG

(21) Anmeldenummer: **87101679.6**

(22) Anmeldetag: **06.02.87**

(51) Int. Cl.⁴: **G 06 F 1/00**

(30) Priorität: **27.02.86 DE 3606383**

(43) Veröffentlichungstag der Anmeldung: **09.09.87**
**Patentblatt 87/37**

(84) Benannte Vertragsstaaten: **AT BE CH FR GB IT LI NL**

(71) Anmelder: **Hamacher, Wolfram Maria Johannes,**
**Mendelssohnstrasse 88, D-6000 Frankfurt am Main (DE)**

(72) Erfinder: **Hamacher, Wolfram Maria Johannes,**
**Mendelssohnstrasse 88, D-6000 Frankfurt am Main (DE)**

(74) Vertreter: **Jochem, Bernd, Dipl.-Wirtsch.-Ing. et al,**
**Patentanwälte Beyer & Jochem Postfach 17 01 45,**
**D-6000 Frankfurt/Main (DE)**

(54) **Sicherungseinrichtung mit Sicherungsschlüssel für Personal- und Arbeitsplatzcomputer.**

(57) Die Sicherungseinrichtung mit Sicherungsschlüssel (36) dient für Personal- und Arbeitsplatzcomputer, deren zentrale Recheneinheit mit wenigstens einer Einrichtung zum Beschreiben und/oder Lesen von kompakten Datenträgern, wie z.B. Disketten, verbindbar ist. Sie besteht aus einer durch den Sicherungsschlüssel (36) betätigbaren Verriegelung (28, 30) des Computergehäuses (10, 34) in Verbindung mit einem Schalter, durch den die Datenverbindung zwischen der zentralen Recheneinheit und der Einrichtung zum Beschreiben und/oder Lesen von kompakten Datenträgern zu unterbrechen oder in anderer Weise zu beeinflussen ist.

0235615

## Sicherungseinrichtung mit Sicherungsschlüssel
## für Personal- und Arbeitsplatzcomputer

Die Erfindung betrifft eine Sicherungseinrichtung mit Sicherungsschlüssel für Personal- und Arbeitsplatzcomputer, deren zentrale Recheneinheit mit wenigstens einer Einrichtung zum Beschriften und/oder Lesen von kompakten Datenträgern verbindbar ist.

Ebenso wie bei anderen ein- und ausschaltbaren Geräten ist es seit langem bekannt, Personal- und Arbeitsplatzcomputer durch ein Schloß mit Sicherungsschlüssel gegen unbefugtes Einschalten zu sichern.

Die Erfindung beschäftigt sich demgegenüber mit dem Problem, wie ein bestimmungsgemäß ein- und ausschaltbarer und auch bestimmungsgemäß mit den dafür vorgesehenen Programmen zu betreibender Computer während des laufenden Betriebs gegen Mißbrauch gesichert werden kann. Dieses Problem ist vor allem dort gravierend, wo z.B. über Computer Zahlungen oder Buchungen vorgenommen, in wichtige Programme oder Datenbestände eingegriffen oder aus Gründen des Datenschutzes zu sichernde Dateien gegen Kopieren geschützt werden sollen, aber die Computer während des laufenden Betriebs in Räumen stehen, zu denen eine größere Zahl von Personen Zugang hat, von welchen ggf.

mehrere mit demselben Computer unter Zugriff auf bestimmte
Programme zu arbeiten haben.

Der Schutz von Programmen und Daten wird zur Zeit durch geeignete Maßnahmen in den Programmen angestrebt. Es ist jedoch
bekannt, daß Software-Schutzmaßnahmen mit einem Unsicherheitsfaktor behaftet sind, da sie in der Regel von professionellen
Computer-Kriminellen umgangen bzw. durchbrochen werden können.

Der Erfindung liegt daher die Aufgabe zugrunde, eine Sicherungseinrichtung der eingangs genannten Art zu schaffen, die es mit
sehr einfachen Mitteln erlaubt, Programme und Daten gegen Manipulationen und Diebstahl zu sichern, während sie für bestimmte Anwendungen zur Verfügung stehen, d.h. während der Computer
eingeschaltet ist und ggf. mehreren Personen als Arbeits- und/
oder Kommunikationshilfsmittel dienen kann.

Vorstehende Aufgabe wird erfindungsgemäß dadurch gelöst, daß
mit einem durch den Sicherungsschlüssel betätigbaren Schalter
die Datenverbindung zwischen der zentralen Recheneinheit und
der Einrichtung zum Beschreiben und/oder Lesen von kompakten
Datenträgern veränderbar ist.

Typische Einrichtungen zum Beschreiben und/oder Lesen von kompakten Datenträgern sind zur Zeit bei den weit verbreiteten
Personal- und Arbeitsplatzcomputern Diskettenlaufwerke mit
ihren jeweils zugehörigen Steuervorrichtungen (Disketten-
Controller). Daneben sind auch Fest- und Wechselplattenlaufwerke, Magnetbandlaufwerke und mit Laser zu beschreibende
bzw. abzutastende Datenträgerlaufwerke mit zugehörigen Steuervorrichtungen gebräuchlich, die in das Computergehäuse eingebaut oder als separate Einheiten über Kabel daran angeschlossen werden können. Im Sinne der Erfindung sind in diesem Zusammenhang weiterhin auch solche Speichereinrichtungen umfaßt, die keine beweglichen Teile haben, also z.B. Magnetblasenspeicher oder sonstige Speicherbausteine. Alle diese
Einrichtungen gestatten es, im Gegensatz zu bedrucktem Papier auf sehr kleiner Fläche bzw. auf sehr kleinem Raum unauffällig eine große Zahl von Informationen zu transportieren.
Daher setzt normalerweise an dieser Stelle die Computerkriminalität an.

Durch die Erfindung wird nunmehr erreicht, daß z.B. ein bestimmter Computer durchaus als Terminal oder mit bestimmten
Programmen und Daten, die auf einer eingebauten Festplatte
gespeichert sind, betrieben werden kann, nachdem z.B. der
Benutzer ein bestimmtes Codewort eingegeben hat. Wenn und solange jedoch z.B. die Diskettenlaufwerke dieses Computers
mittels des Sicherungsschlüssels ausgeschaltet sind, hat
niemand mehr die Möglichkeit, und zwar nicht einmal nach Eingabe eines zulässigen Codeworts, mittels eines auf einer
Diskette gespeicherten Manipulationsprogramms in die auf der
Festplatte oder in einem angeschlossenen zentralen Großcomputer enthaltenen Programme und Dateien einzugreifen, um diese
zu verändern oder zu löschen. Außerdem ist wirksam verhindert,
daß Programme und Daten auf Diskette kopiert und gestohlen
werden. Nur mittels des Sicherungsschlüssels lassen sich von
derjenigen Person, der er anvertraut ist, die Diskettenlaufwerke in Betrieb nehmen und benutzen, aber auch, z.B. bei nur
vorübergehendem Verlassen des Raums sehr, schnell und einfach
wieder sperren. Dasselbe gilt entsprechend für andere Einrichtungen zum Beschreiben und/oder Lesen von kompakten Datenträgern, die erfindungsgemäß mittels des Sicherungsschlüssels
wahlweise gesperrt oder freigegeben werden sollen. Mit der
Übergabe des Sicherungsschlüssels an eine bestimmte Person
ist gleichzeitig die Verantwortung für die Unversehrtheit der
Programme und Daten im System geregelt und gewährleistet.

Das Anzeigen von Daten auf einem Bildschirm oder ihr Ausdruck auf Papier kann im Vergleich zu Manipulationen mittels kompakter Datenträger nur verhältnismäßig geringen Schaden verursachen, so daß hierfür herkömmliche Sicherheitsvorkehrungen, z.B. die Notwendigkeit der Eingabe eines Codeworts, genügen. Der Ausdruck auf Papier und dessen Transport sind außerdem auffällige Handlungen, die leicht kontrolliert werden können.

Selbstverständlich bietet es sich an, ergänzend zu der vorgeschlagenen Sicherungseinrichtung weitere Schutzmaßnahmen im Software-Bereich vorzunehmen, um z.B. auch Manipulationen durch Eingabe über die Tastatur zu unterbinden.

Damit erfindungsgemäß mittels des Sicherungsschlüssels und eines Schalters die Datenverbindung zwischen der zentralen Recheneinheit und der Einrichtung zum Beschreiben und/oder Lesen von kompakten Datenträgern wahlweise verändert, insbesondere unterbrochen bzw. gesperrt, ggf. aber auch im Sinne einer Beeinflussung, z.B. Verfälschung der übertragenen Signale verändert wird, stehen dem Fachmann eine Vielzahl von technischen Möglichkeiten zur Verfügung. Es genügt z.B., mittels des genannten Schalters die Energieversorgung eines oder mehrerer Antriebe eines Laufwerks zu unterbrechen. Noch einfacher ist es normalerweise, die Steuervorrichtung (den Controller) mittels des vorgeschlagenen Schalters in seiner Funktion zu stören oder auszuschalten, sei es durch Unterbrechung der Energiezufuhr oder einer Verbindung zwischen den Komponenten der Steuervorrichtung untereinander oder mit der zentralen Recheneinheit. Es genügt beispielsweise, mittels des zusätzlichen Schalters wahlweise den Taktgeber eines Disketten-Controllers auszuschalten.

In bevorzugter Ausgestaltung der Erfindung ist der Schalter mit einer durch den Sicherungsschlüssel betätigbaren, lösbaren Verriegelungseinrichtung verbunden, durch welche das Öffnen eines die Baugruppen des Computers umschließenden Gehäuses blockierbar ist. Auf diese Weise genügt ein einziger Sicherungsschlüssel, um zusätzlich auch die Hardware-Komponenten des Computers
vor Eingriffen und Veränderungen zu schützen. Die Art und Weise
der Verbindung des Schalters mit der lösbaren Verriegelungseinrichtung des Computergehäuses gestattet dabei wiederum zahlreiche Ausführungsvarianten. Ebenso, wie der Schalter direkt
oder indirekt, z.B. auch nur über eine durch Datenleitung mit ihm
verbundene Hilfseinrichtung, die Datenverbindung zwischen der
zentralen Recheneinheit und der Einrichtung zum Beschreiben
und/oder Lesen von kompakten Datenträgern außer Funktion setzen kann, müssen die Verriegelungseinrichtung und der Schalter
nicht unbedingt mechanisch miteinander verbunden sein, sondern
können auch getrennt voneinander am bzw. im Computergehäuse
angeordnet und nur über eine elektrische oder sonstige Signalleitung miteinander gekoppelt sein. Es kommt im Sinne der zuletzt genannten bevorzugten Ausführungsform nur darauf an, daß
mit demselben Sicherungsschlüssel gleichzeitig das geschlossene Computergehäuse gesichert und die Einrichtung zum Beschreiben und/oder Lesen von kompakten Datenträgern ausgeschaltet
wird.

In weiterer bevorzugter Ausgestaltung der Erfindung ist vorgesehen, daß in derjenigen Stellung des Schalters, in welcher
eine normale Betriebsverbindung zwischen der zentralen Recheneinheit und der Einrichtung zum Beschreiben und/oder Lesen von
kompakten Datenträgern besteht, sich der Sicherungsschlüssel
in seiner Einstecköffnung im Computer befindet. Der vorzugsweise äußerlich sichtbare Sicherungsschlüssel läßt demnach
auf den ersten Blick erkennen, daß z.B. das Diskettenlaufwerk
zur Benutzung verfügbar ist. Wird der Schlüssel abgezogen,
ist auch das Diskettenlaufwerk gesperrt.

Die Erfindung wird nachstehend anhand eines in der Zeichnung
gezeigten Ausführungsbeispiels näher erläutert. Es zeigen:

Fig. 1     eine Draufsicht auf die Teile eines Arbeitsplatzcomputers bei abgenommenen Gehäusedeckel;

Fig. 2     einen vereinfachten senkrechten Querschnitt durch
           die Vorderwand des Computers nach Fig. 1;

Fig. 3     eine Draufsicht auf die in Fig. 2 gezeigten Teile
           an der Vorderwand des Computers.

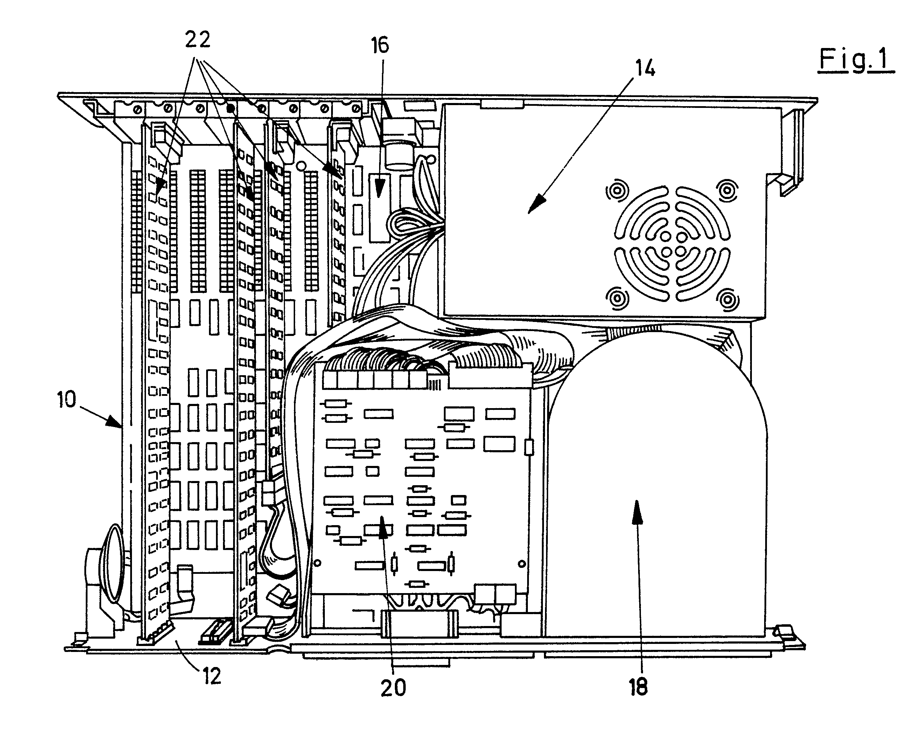

Der in Fig. 1 gezeigte Computer hat in herkömmlicher Ausführung einen Tragrahmen 10, dessen Vorderwand mit 12 bezeichnet
ist. Auf dem Tragrahmen sind ein Netzteil 14, eine Systemplatine 16, welche die zentrale Recheneinheit des Computers
enthält, ein Festplattenlaufwerk 18, ein Diskettenlaufwerk 20
sowie verschiedene mit Mikrochips und sonstigen Schaltungseinrichtungen bestückte Platinen 22 befestigt. Normalerweise
enthält eine dieser Platinen 22 die Steuervorrichtung (den
Controller) des Diskettenlaufwerks 20.

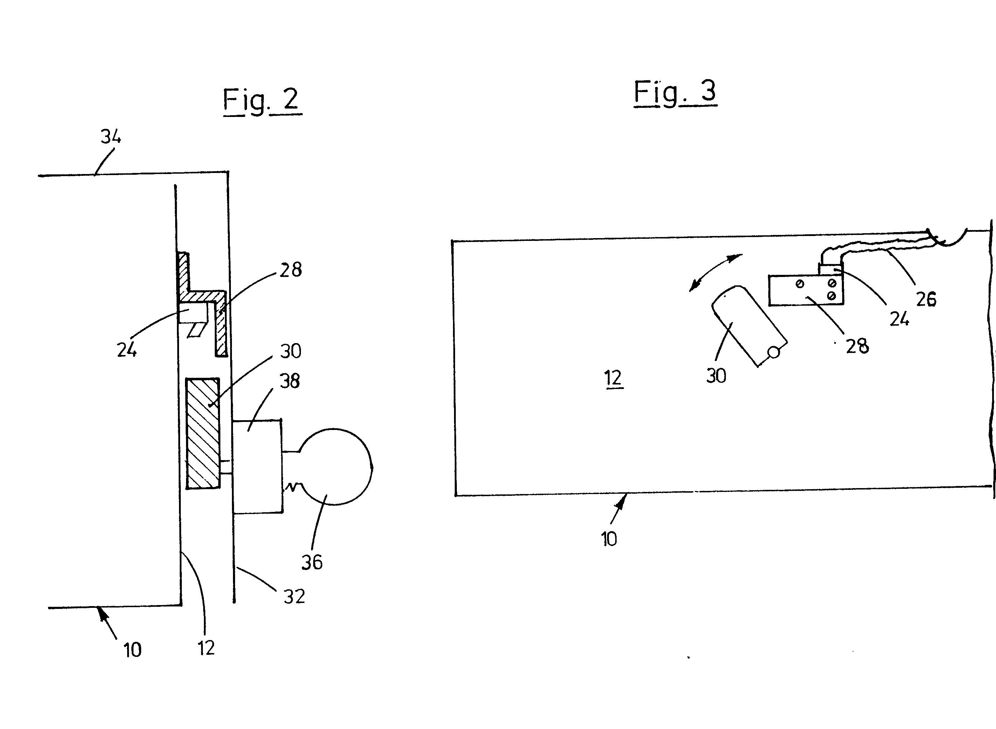

Gemäß Fig. 2 und 3 ist an der Vorderwand 12 des Tragrahmens 10
eine Verriegelungseinrichtung mit einem Schalter 24 angebracht.
Der Schalter 24 ist im Beispielsfall über Leitungen 26 (Fig. 3)
mit der Steuervorrichtung des Diskettenlaufwerks 20 verbunden.
Bei Betätigung des Schalters 24 wird die Steuervorrichtung des
Diskettenlaufwerks 20 und damit dieses selbst bei im übrigen
funktionsbereitem Computer wahlweise ein- und ausgeschaltet.

Der Schalter 24 ist der Einfachheit halber unmittelbar mechanisch mit der abschließbaren Verriegelungseinrichtung des
Computergehäuses verbunden. Die Verriegelungseinrichtung besteht im einzelnen aus einem ggf. auch nachträglich an der
Außenseite der Vorderwand 12 des Tragrahmens 10 befestigten,
z.B. angeschraubten Winkelstück 28, welches mit einem Riegel
30 zusammenwirkt, der drehbar an der mit 32 bezeichneten Vorderwand eines die offenen Seiten des Tragrahmens 10 überdeckenden Deckels 34 des Computergehäuses gelagert ist. Der Riegel
30 ist mittels eines Sicherungsschlüssels 36 drehbar, der in
ein auf der Außenseite des Deckels 34 angebrachtes Schloß 38
eingesteckt werden kann.

Fig. 2 und 3 zeigen die Verriegelung 28, 30 in geöffneter Stellung. Wird mit Bezug auf Fig. 3 der Riegel 30 mittels des
Sicherungsschlüssels 36 im Uhrzeigersinn gedreht, hintergreift er das Winkelstück 28 und betätigt gleichzeitig den
Schalter 24. In dieser Stellung ist somit der Deckel 34 mit
dem Tragrahmen 10 fest verriegelt und der Schalter 24 so geschaltet, daß das Diskettenlaufwerk 20 gesperrt ist. Nur in
dieser Eingriffsstellung der Verriegelung 28, 30 läßt sich
der Sicherungsschlüssel 36 aus dem Schloß 38 ziehen. Im geöffneten Zustand nach Fig. 2 und 3 wird dagegen der Sicherungsschlüssel 36 im Schloß 38 festgehalten, während der Schalter
24 das Diskettenlaufwerk 20 eingeschaltet hat.

Die vorstehend beschriebene Konstruktion gestattet z.B. auch
eine Ausführung derart daß ein auf einer der Platinen 16
oder 22 gespeichertes Programm den Schaltzustand des Schalters
24 abfragt und daraufhin den Zugriff der zentralen Recheneinheit der Systemplatine 16 auf das Diskettenlaufwerk 20 verweigert.

0235615

- 8 -

**PATENTANSPRÜCHE**

1. Sicherungseinrichtung mit Sicherungsschlüssel für Personal- und Arbeitsplatzcomputer, deren zentrale Recheneinheit mit wenigstens einer Einrichtung zum Beschreiben und/oder Lesen von kompakten Datenträgern verbindbar ist, **d a d u r c h g e k e n n z e i c h n e t ,** daß mit einem durch den Sicherungsschlüssel (36) betätigbaren Schalter (24) die Datenverbindung zwischen der zentralen Recheneinheit (16) und der Einrichtung (20) zum Beschreiben und/oder Lesen von kompakten Datenträgern veränderbar ist.

2. Sicherungseinrichtung nach Anspruch 1, **d a d u r c h g e k e n n z e i c h n e t ,** daß der Schalter (24) mit einer durch den Sicherungsschlüssel (36) betätigbaren, lösbaren Verriegelungseinrichtung (28, 30) verbunden ist, durch welche das Öffnen eines die Baugruppen des Computers umschließenden Gehäuses (10, 34) blockierbar ist.

3. Sicherungseinrichtung nach Anspruch 1 oder 2, **d a - d u r c h g e k e n n z e i c h n e t ,** daß in derjenigen Stellung des Schalters (24), in welcher eine normale Betriebsverbindung zwischen der zentralen Recheneinheit (16) und der Einrichtung (20, 22) zum Beschreiben und/oder Lesen von kompakten Datenträgern besteht, sich der Sicherungsschlüssel (36) in seiner Einstecköffnung (38) im Computer befindet.

Fig.1

## Fig. 2

## Fig. 3

0235615